# EUROPEAN PATENT SPECIFICATION

(11) **EP 2 718 347 B1**
(45) Date of publication and mention of the grant of the patent: **15.03.2023**
(21) Application number: 12726086.7
(22) Date of filing: 01.06.2012
(51) Int. Cl.: C08G 61/08, C08L 65/00, C08J 5/12, F16L 13/02, F16L 58/10, F16L 58/18

(54) **A FIELD JOINT COATING MATERIAL AND A PROCESS FOR MAKING A FIELD JOINT**
BESCHICHTUNGSMATERIAL FÜR MONTAGESTOSS UND VERFAHREN ZUR HERSTELLUNG EINES MONTAGESTOSSES
MATÉRIAU DE REVÊTEMENT DE RACCORD DE CANALISATION ET PROCÉDÉ POUR LA FABRICATION D'UN RACCORD DE CANALISATION

(30) Priority: 09.06.2011 EP 11290265
(43) Date of publication of application: 16.04.2014
(73) Proprietor: Rimtec Corporation, Tokyo 100-0005 (JP)
(72) Inventor: RECHER, Gilles, F-59700 Marcq en Baroeul (FR); ALLAIN, Sylvain, F-59000 Lille (FR); DEMOUTIEZ, Frederic, F-59290 Wasquehal (FR)
(74) Representative: Adam, Holger
(86) International application number: PCT/EP2012/060361
(87) International publication number: WO 2012/168149

(56) References cited:
- EP-A1- 2 042 537
- EP-A1- 2 280 017
- EP-A2- 0 654 632
- WO-A2-2008/042342
- GB-A- 2 462 149
- JP-A- 2001 056 090
- DATABASE WPI Week 199713 Thomson Scientific, London, GB; AN 1997-135369 XP002457529, "Anti-corrosion protecting method for jacking pipe - by forming metal case on welding joint of jacking pipes with intermediate contg. norbornene gp. monomer metathesis catalyst, and activating agent", -& JP 9 014574 A (FURUKAWA ELECTRIC CO LTD) 17 January 1997 (1997-01-17) -& DATABASE CA [Online] CHEMICAL ABSTRACTS SERVICE, COLUMBUS, OHIO, US; 28 March 1997 (1997-03-28), IKEDA, SHINTARO ET AL: "Corrosion prevention for underground pipes", XP002684850, retrieved from STN Database accession no. 1997:203766
- DATABASE CA [Online] CHEMICAL ABSTRACTS SERVICE, COLUMBUS, OHIO, US; 1 March 1997 (1997-03-01), MORITA, TOORU ET AL: "Method for prevention of corrosion of joints of metal pipes", XP002684851, retrieved from STN Database accession no. 1997:134653 -& JP 8 334196 A (FURUKAWA ELECTRIC CO LTD; NIPPON ZEON CO) 17 December 1996 (1996-12-17)
- Qing-Lin Ni ET AL: "Enhancement of graft yield and control of degradation during polypropylene maleation in the presence of polyfunctional monomer", Journal of Applied Polymer Science, vol. 121, no. 5, 23 March 2011 (2011-03-23), pages 2512-2517, XP055567876, US ISSN: 0021-8995, DOI: 10.1002/app.33941
- JUNJIE TANG ET AL: "Effect of Residual Maleic Anhydride in PP-g-MAH on the Thermo-Oxidative Aging Properties of RGF-PP", JOURNAL OF MATERIALS SCIENCE AND CHEMICAL ENGINEERING, vol. 05, no. 07, 13 July 2017 (2017-07-13) , pages 61-70, XP055720316, ISSN: 2327-6045, DOI: 10.4236/msce.2017.57008

## Description

The present invention relates to a process of making a field joint for pipelines for use especially, but not exclusively, sub-sea and, more specifically, to a method of forming a field joint for pipelines which facilitates smooth reeling and laying of the pipelines.

### Background of the invention

Pipelines, such as those used to carry oil or gas, are typically formed from many lengths of steel pipes which are factory-coated with a polymeric protective coating at a factory remote from the location at which they are to be laid.

At the factory, the coating is applied to the outside of the pipes leaving a short uncoated length of pipe at each end of the pipe. The uncoated ends enable the lengths of pipe to be welded together to form a pipeline.

The pipes are normally welded together as an integral part of the pipe laying process. Where this is carried out off shore the pipe welding would generally take place on a lay barge or a reel ship on a continuous basis.

In the case of insulated pipelines, the polymeric coating is usually few centimetres thick and generally based on solid, syntactic or foamed polymeric materials such as polypropylene and polyethylene. Typical actual coatings comprise layers of different materials to meet the specifications requested by deep water long distance connecting pipelines.

The welded ends of the individual lengths of pipe, known as field joints, must be coated to provide protection to the exposed pipe which is, ideally, equivalent to that of the factory applied coating which extends over the remainder of the pipe.

In addition, it is desirable for the field joints to be coated as quickly as possible since this affects the rate at which the pipeline can be laid. In addition the field joints should be solidified enough for the pipe to be laid without damaging the field joints on the laying equipment.

In conclusion a competitive field joint coating system should provide full compatibility, similar protection and insulation properties as the parent coating, being applied as quickly as possible even in large thickness and/or volume quantity, and solidify fast enough to allow the pipeline to be laid in the same time as the one used for the welding process itself.

Additionally it is advantageous for the field joint coating to exceed or offer at least similar performance as the parent coating in term of operating temperature and hydrolysis resistance. The market tendency is to operate at deeper and deeper level thus requesting higher operating temperature and therefore higher insulation performance and resistance to hydrolysis in higher temperature. Cost goes up with increased thickness of the coating.

A system of polypropylene injection on top of fusion bonded epoxy and adhesive has been developed which fully fuses the infill polypropylene to the parent coating thus eliminating any track for water to penetrate to the pipe surface. In addition, unlike polyurethanes, polypropylene is not subjected to hydrolysis. This normally provides total end to end integrity.

The infill polypropylene being a thermoplastic polymer still highly viscous when melted powerful injection equipment has to be used to be able to inject the melted polypropylene thermoplastic polymer, as well as very solid mould construction to be able to withstand the injection pressure. Typically the field joint coating can not be done in one single continuous operation and request multiple injections. To reduce the melted viscosity as much as possible, high temperature conditions have to be used, thus increasing the time needed to cool down and solidify the field joint. As a consequence, this type of system is not compatible with many offshore deep water pipe lay methods, when thick insulating pipe coating is requested.

Several methods have been proposed to meet the above criteria, and specifically to reduce the time needed to apply and solidify the field joint coating material without compromising on the protective properties. Most of them involve the use of a fast reacting thermoset polyurethane resin, alone or in combination with various other materials in order to improve adhesion of the polyurethane to the parent coating and/or resistance of the polyurethane to hydrolysis under pressure and temperature as it can be seen in the following patents and patent applications.

EP 0654632 titled "A method of filling a gap in a pipe coating" describes the use of corona or plasma discharge to enhance the surface energy of the polyolefin ends of the parent coating to provide better adhesion of thermoset polyurethane curable mixture.

US 6264871 titled "Field joint" describes a specific design of a field joint facilitating smooth lying and providing mechanical connection of the curable polyurethane resin to the polyolefin parent coating ends.

GB 2462149 titled "Pipeline field joint having an epoxy layer extending between the existing coatings" describes the use of an adhesion primer extended from the cut side on one end to the cut side on the other end.

WO 2008/054602 titled "Pipeline field joint coating for wet insulation with improved adhesion" describes the use of specific heat treatment in order to improve adhesion and compatibility between thermoplastic polyolefin base parent coating and fast curing polyurethane field joint coating.

WO 2008/042342 titled "Pipeline field joint coating for wet insulation field joints" describes a method to protect a polyurethane field joint by a thermoplastic cover in order to prevent water ingress reaching the pipe surface and hydrolysis of the polyurethane wet insulation.

EP 2 042 537 A1 describes a polycycloolefin (PCO) thermoset network assembly obtainable by polymerising a first reactive composition comprising a norbornene-type cycloolefin monomer in the presence of a Mo- or W-catalyst to obtain a PCO-Mo/W-network and polymerising a second reactive composition comprising a norbornene-type cycloolefin monomer in the presence of Ru-catalyst on said PCO-Mo/W-network to obtain a PCO thermoset network assembly.

EP2 280 017 A1 describes a catalytic complex for olefin metathesis reactions, a process for its preparation and to its use in olefin metathesis reactions, particularly in ring opening metathesis polymerisation (ROMP) reactions.

JP 9 014 574 A describes a method whereby a metal mold 4 is arranged by wrapping a joint part A formed by welding a pipe end of propeller pipes 1, 2, and after reaction liquid, containing a norbornene monomer, metathesis catalyst and an active agent, is injected to a gap part B formed by the joint part A and the metal mold 4, the reaction liquid is cured to form an anticorrosion protecting layer coating the joint part A.

JP 8 334 196 A describes a corrosion resistant protecting method for a metal pipe connecting part, in the method, while the connecting part A of a metal pipe including the welding part 3 of a metal pipe and exposed surface parts 1b, 2b of the metal pipe positioned on both sides of the welding part 3 is covered, a mold 5 is arranged, then reaction liquid containing norbornane type monomer, metathesis catalyst, and activator is filled in a clearance formed by the connecting part A and the mold 5, and the reaction liquid is cured.

JP 2001 056090 A describes a corrosion prevention layer forming process for forming a corrosion prevention layer 3 by a corrosion prevention material onto the site joint of a propulsion pipe, a reaction liquid injecting process for injecting a norbornene monomer, a metathesis catalyst and a reaction liquid containing an active agent into an air gap part formed by the outside periphery surface of the propulsion pipe including the corrosion prevention layer 3 and a metal die by arranging the metal die while covering the corrosion prevention layer 3 and a protection layer forming process for forming a protection layer 12 for covering the outside periphery surface by hardening the reaction liquid injected in the reaction liquid injection process.

Qing-Lin Ni; ET AL: "Enhancement of graft yield and control of degradation during polypropylene maleation in the presence of polyfunctional monomer.", Journal of Applied Polymer Science, vol. 121, no. 5, 23 March 2011 (2011-03-23), pages 2512-2517, XP055567876, US, ISSN: 0021-8995, DOI:10.1002/app.33941 studies free-radical initiated grafting of maleic anhydride (MAH)/polyfunctional acrylate (PFA) multimonomer system onto polypropylene (PP) via reactive extrusion and investigates the effects of PFA and initiator concentration on the grafting reaction. According to the study, PFA as a comonomer could greatly enhance MAH grafting degree, which increased monotonically as the molar ratio of PFA to MAH increased.

Junjie Tang ET AL: "Effect of Residual Maleic Anhydride in PP-g-MAH on the Thermo-Oxidative Aging Properties of RGF-PP", Journal of Materials Science and Chemical Engineering, vol. 05, no. 07, 13 July 2017 (2017-07-13), pages 61-70, XP55720316, ISSN: 2327-6045, DOI: 10.4236/msce.2017.57008 studies the mechanical, morphological and thermo-oxidative aging properties of the glass fiber reinforced polypropylene (RGF-PP). According to the study, PP-g-MAH compatibilizer could improve the mechanical properties of RGF-PP, while from thermal and morphological analysis results, the content of residual MAH had negative influence on long term thermo- oxidative aging properties of RGF-PP with adding PP-g-MAH compatibilizer; the lower the residual content of MAH is, the better the thermo stability of the PP-g-MAH is, and also the better the thermo-oxidative aging properties is obtained.

Hence there is still a need on the market for field joint coating process that combines short cycle times, chemical compatibility with olefin coating on the pipe, hydrolysis resistance at elevated temperatures, long term insulation properties and heat resistance. Existing systems offer only answers to some but not all of these requirements.

The present invention aims to provide a method for producing an improved field joint.

According to one aspect, the present invention relates to a process of making a field joint comprising the following steps:
(i) abrading or sand blasting of the bare metal surface of a steel pipe
(ii-1) applying an epoxy primer or epoxy phenol primer on the bare metal surface
then applying a linear low-density polyethylene (LLDPE) resin having a maleic anhydride linear chain grafting or polypropylene resin having a maleic anhydride linear chain grafting, said resins having a maleic anhydride grafting content of 0.2 to 10%, on said primer, as an adhesive layer, or
(ii-2) applying a linear low-density polyethylene (LLDPE) resin having a maleic anhydride linear chain grafting or polypropylene resin having a maleic anhydride linear chain grafting, said resins having a maleic anhydride grafting content of above 4%, on the bare metal surface, as an adhesive layer;
(iii) abrading and cleaning the thermoplastic end cuts of the parent coatings
(iv) putting in place a mould around the pipe in the filed joint area to define a cavity between the internal surface of the mould and the field joint
(v) injecting a field joint coating material based on a fast curable olefin liquid formulation in the cavity,

wherein the field joint coating material comprises,
   (a) one olefin monomer or one oligomer able to undergo polymerisation and optionally cross linking
   (b) one catalytic system able to activate polymerisation and optionally cross linking process of said monomer or oligomer,
wherein the monomer is a norbornene-type cycloolefin monomer, and
wherein the catalytic system is able to activate Ring Opening Metathesis Polymerisation of a norbornene-type cycloolefin

In another embodiment of the process according to the present invention, the mould is maintained under cooling to minimize the cycle time.

According to another embodiment, the mould is purged with nitrogen prior to the injection of the field joint material.

In still another embodiment, the thermoplastic surfaces are heated prior to the injection of the field joint material.

### Brief Description of the Drawings

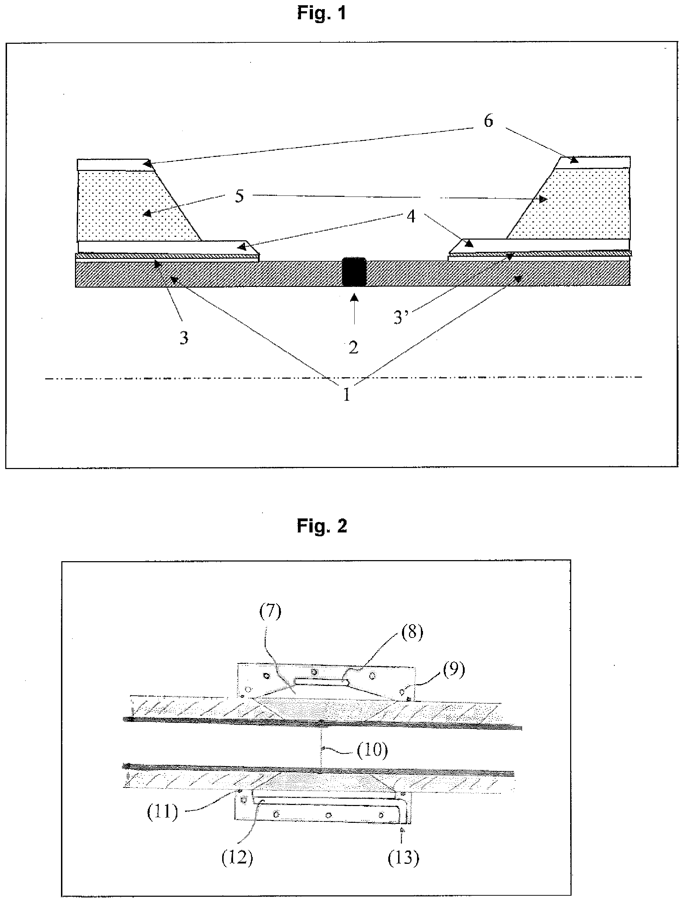

Fig. 1: Schematic representation of a field joint. For the sake of clarity the second arrow of layer 3 and 3' are not represented but it should be understood that the figure is symmetrical.
In Fig. 1 (1) denotes a steel pipe, (2) denotes a weld, (3) denotes a corrosion protective layer consisting of epoxy or epoxy phenol primer or fusion bonded epoxy (FBE), (3') denotes an adhesive layer, (4) a first layer of solid polyethylene or polypropylene, (5) denotes a thick insulating polypropylene foam and (6) denotes a final solid or polyethylene or polypropylene layer.
Fig. 2: Schematic representation of a mould used in the method of forming a field joint. (7) denotes a flash, (8) denotes a vent, (9) denotes a water channel for water having a temperature in the range of typically 20°C to 40°C, (10) denotes the welded location, (11) denotes a sealing gasket, (12) denotes a gate and (13) denotes a mix head location.

### Detailed Description of the Invention

The present invention is based on the use of a fast curing liquid based olefin formulation to produce a field joint coating without the need to treat the thermoplastic cut back of the pipe either by applying a primer on the cut back surface or by increasing the surface energy by the means of a plasma or a corona treatment. After pipes welding and conventional preparation of the weld and the bare metal adjacent to the weld, epoxy primer or epoxy phenol primer is applied on the metal followed by the projection of the adhesive layer coat thus ensuring the continuity of the parent coating first 2 layers. After preparation of the cut back by simple cleaning and abrading a mould is put in place around the field joint area and the curable liquid formulation is injected by the means of an injection unit. Due to the liquid and non polar olefin nature of the curable formulation, perfect wetting and chemical welding is achieved after curing between the polyolefin layers of the parent coating and the cured ("polymerized") olefin formulation, thus preventing water ingress and hydrolysis leading to in service field joint deterioration.

Additionally the curable formulation catalytic system can be adjusted to offer curing time compatible to any size of field joint coating. Due to the very low viscosity of the curable olefin formulation simple and fast operated mould can be used for injecting the said curable olefin formulation.

Additionally the high heat deflection temperature achieved by the curable formulation after curing and the possibility to use a water cooling system on the mould reduce the cycle time to minutes even when the coating is thicker than 50 mm.

Referring to Figure 1 a pipeline field joint is formed between two lengths of steel pipe (1) welded together at weld (2). Each length of pipe (1) is coated with a factory applied coating comprising a corrosion protective layer (3) consisting of epoxy or epoxy phenol primer or fusion bonded epoxy (FBE), an adhesive layer (3'), a first layer of solid polyethylene or polypropylene (4), a thick insulating polypropylene foam (5) and a final solid or polyethylene or polypropylene layer (6). The factory applied coatings (3), (3'), (4), (5), (6) on each length has been cut back to form a double chamfer and leave the steel pipe exposed in the region of the weld.

It is to be understood that the scope of the invention is not limited to the example above and that the factory applied coating can take any suitable form and may comprise a single polypropylene layer - coating (3), (3') and (4) - or two polypropylene layers - coating (3), (3'), (5) and (6). Also, the factory applied coating may be cut back in any suitable way. In accordance to well known methods after the two lengths of pipe have been welded together the exposed steel pipe and adjacent factory coating are cleaned. Several different cleaning processes may be employed to clean the joint, for example the exposed steel surface may be blast cleaned using abrasive particles and the polypropylene coated surfaces may be cleaned and abraded using a powered abrasive disc. The entire joint area may then be blown clean with compressed air in order to remove any dust particles. Typical cleaning complies with a standard of SA2 to SA3 (BS7079).

An epoxy primer or epoxy phenol primer or a fusion bond epoxy is then applied on the bare metal preliminary heated by an induction heating coil to the suitable temperature. In practice the end of the polypropylene factory coatings - (4), (5), (6) - are protected during the corrosion protective coating (3) application that usually extends from one end of the factory applied coating (3) to the other end to form a continuous coating. Typical primer coating thickness is 250 micrometers.

This operation is followed by the application of an adhesive tie layer (3') in the same conditions as for the parent coating, having a typical thickness of 500 microns. The adhesive tie layer coating could be of any of the conventionally available type for this application providing it is compatible with the chosen corrosion protective coating applied underneath.

The adhesive layer is chosen from the family of modified linear low-density polyethylene (LLDPE) resins. The modifications include grafting the linear chain by maleic anhydride grafting, in content ranging from 0.2% to 10%.

Alternatively the adhesive layer is a modified linear low-density polyethylene (LLDPE) resin having a grafting content above 4%, thus avoiding the need of a corrosion protection epoxy or epoxy phenol primer.

It is clear from the above description that prior to the injection of the liquid curable olefin formulation all the external surfaces are now polyolefin based thermoplastic polymer materials.

A cylindrical mould is then located around the field joint coating and close tight around the external polypropylene surface (6) of the pipe. The mould is thermally controlled at 20°C to provide a fast cooling.

Commercially available Telene^{®} 1650 A and B formulation is then injected into the cavity defined by the inner wall of the mould and the external surface of the various layer composing the cut back of the pipe ends by the mean of an Cannon A 100 RIM injection unit equipped with an FPL 18 mixhead. The formulation is allowed to cure for 5 minutes before the mould is removed. The flashes are removed and the pipeline is move by one step to allow the next field joint to be coated.

It is understood that a wide variety of fast curable formulations can be used. Such a curable olefin base formulation is typically a 2 or 3 components system but single component system can also be formulated.

Because of its intrinsic nature of being based on olefin monomers, the fast curable formulation wets easily the non polar or slightly polar surface of the various thermoplastic olefin based material surface. The curing process can be chemically described as a combination of polymerization and optionally cross linking of the olefin monomer composing the formulation activated by the mean of a catalytically species. As the monomer unit can diffuse into the olefin based thermoplastic materials that compose the various layers 3', 4, 5 and 6, an interpenetrated polymer network is created in the various interface leading to a strong water tight non polar connection between the various material and the cured formulation that can be described as a "chemical welding".

Advantageously the thermoplastic surfaces are preheated to 30 to 60°C prior to the injection of the curable formulation in order to increase the mobility of the thermoplastic polymer chain therefore increasing the thickness of the chemical welding obtained after curing the formulation.

The type of formulation that can be used in the invention comprises at least a cyclo-olefin monomer or oligomer, a Ring Opening Metathesis Polymerisation (ROMP) catalytic system and various additives controlling the reaction or modifying the final polymer properties. It is understood that in the case of using oligomer precursors in the curable formulation the viscosity of the formulation is still low enough to allow the use of low viscosity equipment known as RTM or RIM injection unit.

Depending on the target final properties of the field joint the cyclo-olefin monomer or oligomer can have mono or multiple reactive double bonds thus polymerising into either thermoset or thermoplastic polymer.

The catalytic system used in the formulation according to the invention is a ring opening metathesis catalyst based on Molybdenum, Tungsten, Ruthenium or Osmium complexes.

A further detailed description of the type of olefin monomers, additives and catalyst that can be used in the present invention is included in the application published under EP 2 042 537 from the same applicant.

Advantageously the mould is purged by nitrogen gas prior to the injection when using formulation activated by a tungsten type ROMP catalyst.

Advantageously the curable formulation is selected such as to provide a thermoset polyolefin having a glass transition temperature of more than 140°C after curing thus offering the same service temperature of the pipeline as the one offered by the thermoplastic parent coating.

## Claims

1. A process of making a field joint comprising the following steps:
(i) abrading or sand blasting of the bare metal surface of a steel pipe;
(ii-1) applying an epoxy primer or epoxy phenol primer on the bare metal surface, then applying a linear low-density polyethylene (LLDPE) resin having a maleic anhydride linear chain grafting or polypropylene resin having a maleic anhydride linear chain grafting, said resins having a maleic anhydride grafting content of 0.2 to 10%, on said primer, as an adhesive layer, or
(ii-2) applying a linear low-density polyethylene (LLDPE) resin having a maleic anhydride linear chain grafting or polypropylene resin having a maleic anhydride linear chain grafting, said resins having a maleic anhydride grafting content of above 4%, on the bare metal surface, as an adhesive layer;
(iii) abrading and cleaning the thermoplastic end cuts of the parent coatings;
(iv) putting in place a mould around the pipe in the field joint area to define a cavity between the internal surface of the mould and the field joint;
(v) injecting a field joint coating material based on a fast curable olefin liquid formulation in the cavity;
wherein the field joint coating material comprises,
(a) one olefin monomer or one oligomer able to undergo polymerisation and optionally cross linking
(b) one catalytic system able to activate polymerisation and optionally cross linking process of said monomer or oligomer,
wherein the monomer is a norbornene-type cycloolefin monomer, and
wherein the catalytic system is able to activate Ring Opening Metathesis Polymerisation of a norbornene-type cycloolefin monomer.

2. The process according to claim 1, wherein the monomer is dicyclopentadiene.

3. The process according to claim 1 or 2, wherein the mould is maintained under cooling to minimize the cycle time.

4. The process according to claim 1 or 2, wherein the mould is purged with nitrogen prior to the injection of the field joint material.

5. The process according to claim 1 or 2, wherein the thermoplastic surfaces are heated prior to the injection of the field joint material.

## Patentansprüche

1. Verfahren zur Herstellung eines Montagestoßes, das die folgenden Schritte umfasst:
(i) Abschleifen oder Sandstrahlen der blanken Metalloberfläche eines Stahlrohrs;
(ii-1) Aufbringen einer Epoxid-Grundierung oder Epoxid-Phenol-Grundierung auf die blanke Metalloberfläche, dann Aufbringen eines linearen Polyethylenharzes niedriger Dichte (LLDPE) mit einer linearen Maleinsäureanhydrid-Kettenpfropfung oder eines Polypropylenharzes mit einer linearen Maleinsäureanhydrid-Kettenpfropfung, wobei die Harze einen Maleinsäureanhydrid-Pfropfgehalt von 0,2 bis 10 % aufweisen, auf die Grundierung als Klebeschicht, oder
(ii-2) Aufbringen eines linearen Polyethylenharzes niedriger Dichte (LLDPE) mit einer linearen Maleinsäureanhydrid-Kettenpfropfung oder eines Polypropylenharzes mit einer linearen Maleinsäureanhydrid-Kettenpfropfung, wobei die Harze einen Maleinsäureanhydrid-Pfropfgehalt von über 4 % aufweisen, auf die blanke Metalloberfläche als Klebeschicht;
(iii) Abschleifen und Reinigen der thermoplastischen Endstücke der Grundbeschichtungen;
(iv) Anbringen einer Form um das Rohr im Bereich des Montagestoßes, um einen Hohlraum zwischen der Innenfläche der Form und des Montagestoßes zu bilden;
(v) Einspritzen eines Montagestoßbeschichtungsmaterials auf der Grundlage einer schnell härtenden flüssigen Olefinformulierung in den Hohlraum;
wobei das Montagestoßbeschichtungsmaterial umfasst,
(a) ein Olefinmonomer oder ein Oligomer, das polymerisierbar und gegebenenfalls vernetzbar ist
(b) ein katalytisches System, das in der Lage ist, die Polymerisation und gegebenenfalls den Vernetzungsprozess des Monomers oder Oligomers zu aktivieren,
wobei das Monomer ein Cycloolefinmonomer vom Norbornen-Typ ist, und
wobei das katalytische System in der Lage ist, die Ringöffnungsmetathesepolymerisation eines Cycloolefinmonomers vom Norbornen-Typ zu aktivieren.

2. Verfahren nach Anspruch 1, wobei das Monomer Dicyclopentadien ist.

3. Verfahren nach Anspruch 1 oder 2, wobei die Form unter Kühlung gehalten wird, um die Zykluszeit zu minimieren.

4. Verfahren nach Anspruch 1 oder 2, wobei die Form vor dem Einspritzen des Montagestoßmaterials mit Stickstoff gespült wird.

5. Verfahren nach Anspruch 1 oder 2, wobei die thermoplastischen Oberflächen vor dem Einspritzen des Montagestoßmaterials erwärmt werden.

## Revendications

1. Procédé de fabrication d'un joint de champ comprenant les étapes suivantes :
(i) l'abrasion ou le sablage de la surface métallique nue d'un tuyau en acier ;
(ii-1) l'application d'un primaire époxy ou d'un primaire époxy-phénol sur la surface métallique nue, puis l'application d'une résine de polyéthylène linéaire basse densité (LLDPE) ayant un greffage de chaîne linéaire d'anhydride maléique ou d'une résine de polypropylène ayant un greffage de chaîne linéaire d'anhydride maléique, lesdites résines ayant une teneur en greffage d'anhydride maléique de 0,2 à 10 %, sur ledit primaire, comme couche adhésive, ou
(ii-2) l'application d'une résine de polyéthylène linéaire basse densité (LLDPE) ayant un greffage de chaîne linéaire d'anhydride maléique ou d'une résine de polypropylène ayant un greffage de chaîne linéaire d'anhydride maléique, lesdites résines ayant une teneur en greffage d'anhydride maléique supérieure à 4 %, sur la surface métallique nue, en tant que couche adhésive ;
(iii) l'abrasion et le nettoyage des coupes terminales thermoplastiques des revêtements de base ;
(iv) mettre en place un moule autour du tuyau dans la zone du joint de champ pour définir une cavité entre la surface interne du moule et le joint de champ ;
(v) l'injection d'un matériau de revêtement de joint de champ basé sur une formulation liquide d'oléfine à durcissement rapide dans la cavité ;
dans lequel le matériau de revêtement du joint de champ comprend,
(a) un monomère oléfinique ou un oligomère capable de subir une polymérisation et éventuellement une réticulation
(b) un système catalytique capable d'activer le processus de polymérisation et éventuellement de réticulation dudit monomère ou oligomère,
dans lequel le monomère est un monomère de cyclooléfine de type norbornène, et
dans lequel le système catalytique est capable d'activer la polymérisation par métathèse par ouverture de cycle d'un monomère cyclooléfinique de type norbornène.

2. Procédé selon la revendication 1, dans lequel le monomère est le dicyclopentadiène.

3. Procédé selon la revendication 1 ou 2, dans lequel le moule est maintenu sous refroidissement pour minimiser la durée du cycle.

4. Procédé selon la revendication 1 ou 2, dans lequel le moule est purgé à l'azote avant l'injection du matériau de joint de champ.

5. Procédé selon la revendication 1 ou 2, dans lequel les surfaces thermoplastiques sont chauffées avant l'injection du matériau de joint de champ.
